# EUROPEAN PATENT APPLICATION

(11) **EP 4 691 969 A1**
(43) Date of publication of application: **11.02.2026**
(21) Application number: 24193950.3
(22) Date of filing: 09.08.2024
(51) Int. Cl.: C01B 3/04

(54) **PROCESS FOR PRODUCING A HYDROGEN PRODUCT**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Ulber, Dieter, 60439 Frankfurt am Main (DE); Doomra, Arsh, 60439 Frankfurt am Main (DE); Shrivastava, Swatantra Kumar, 60439 Frankfurt am Main (DE); Vicari, Lorenzo, 60439 Frankfurt am Main (DE)
(74) Representative: Air Liquide

(57) **Abstract**

A process (100) for producing a hydrogen product (20) from a feedstock stream (10), the process (100) comprising the following steps:
- discharging an effluent gas stream from the gas conversion unit (S12),
- providing heat from the effluent gas to contribute to vaporize the ammonia stream (10) of the vaporizer (5),
- wherein vaporizing at least a portion of the ammonia stream (10) in said vaporizer (5) (S2) comprises heating said portion of the ammonia stream (10) with a heating medium different from the effluent gas,
- the process (100) further comprising sending the vaporized ammonia (14) from said vaporizer (5) as said feedstock stream (10) and/or sending the vaporized ammonia (14) from said vaporizer (5) as a fuel to said combustion.

## Description

The field of the present invention is that of hydrogen production.

In the field of hydrogen production, it is known to use the vaporization of liquid ammonia by providing heat. Traditional methods rely mainly on steam in a vaporizer. The vaporizer may be equipped with a blow-down system to separate oil contaminants in the ammonia from the battery limits and reduce the water content in the gaseous ammonia before it enters a pre-cracker(s), a main cracker(s) or an ammonia burner. Alternatively, when steam is not a desired output of the process, waste heat in effluent gasses from the hydrogen production plant is recovered to vaporize the ammonia. During start-up however, not enough heat is available from these effluent gasses. For example, a synthesis gas or a cracked gas is not produced at the nominal quantity or a flue gas from a furnace is not at the nominal temperature. In particular, placing the heat exchanger for vaporization in a flue gas duct, downstream of a cold air preheater for better usage of low temperature waste heat, is challenging, because the flue gas temperature would be too low in that section of the flue gas duct during the start-up phase of the installation.

The invention aims to improve energy efficiency, in particular during the start-up phase.

For this purpose, the invention proposes a process for producing a hydrogen product from a feedstock stream, the process comprising the following steps:
- providing an ammonia stream,
- sending the ammonia stream to a vaporizer configured to receive said ammonia stream and vaporizing at least a portion of said ammonia stream,
- optionally, performing a combustion to bring a heat input to the process,
- introducing the feedstock stream into a gas conversion unit to perform a gas conversion for producing said hydrogen product,
- discharging an effluent gas stream from said gas conversion unit,
- providing heat from the effluent gas to contribute to vaporize the ammonia stream of the vaporizer,
- wherein vaporizing at least a portion of the ammonia stream in said vaporizer comprises heating said portion of the ammonia stream with a heating medium different from the effluent gas,
- the process further comprising sending the vaporized ammonia from said vaporizer as said feedstock stream and/or sending the vaporized ammonia from said vaporizer as a fuel to said combustion.

In one aspect of the invention, the step of providing heat from the effluent gas to contribute to vaporize a portion of the ammonia stream comprises the following steps :
- vaporizing a portion of said ammonia stream sent to the vaporizer, thereby obtaining a gas phase and a liquid phase of the ammonia stream in said vaporizer,
- sending at least part of the liquid phase of the ammonia stream from the vaporizer to a first heat exchanger arranged to at least partially vaporize said liquid phase by heat exchange with the effluent gas and returning the vaporized liquid phase to the vaporizer,

In another aspect of the invention, the step of providing heat from the effluent gas to contribute to vaporize a portion of the ammonia stream comprises the following step:
- heating a portion of the ammonia stream in said vaporizer with a first heat exchanger receiving the effluent gas, said first heat exchanger being arranged in the vaporizer.

In the present disclosure, the "vaporized liquid phase returned to the vaporizer" and the "gas phase" obtained by the ammonia vaporization in the vaporizer are also called "vaporized ammonia".

In the present disclosure, the "heat input to the process" may for example be a heat input to the gas conversion unit.

The feedstock stream in the present disclosure is understood as a feedstock stream to be converted by said gas conversion.

The present invention utilizes two different heating media, for instance steam and cracked gas from a cracking reactor (or a synthesis gas), to ensure effective ammonia vaporization throughout different operational phases, including a start-up phase. The present invention optimizes energy usage and enhances hydrogen production efficiency.

In particular, during the start-up phase, steam provides the necessary heat, as the cracked gas is not sufficiently hot (or is not available). Once the cracked gas reaches an adequate temperature, it provides more heat as a heating medium, reducing the heat provided by the steam.

The invention takes advantage of heating media within the process where the temperature is close to the ammonia vaporization temperature.

In one aspect of the invention, the feedstock stream comprises ammonia and/or a hydrocarbon.

In one embodiment, the gas conversion comprises a cracking reaction of ammonia and produces a cracked gas as said hydrogen product.

In one embodiment, the gas conversion comprises a reforming reaction of a hydrocarbon and produces a synthesis gas as said hydrogen product.

In one embodiment, the effluent gas comprises said cracked gas and/or said synthesis gas.

In one embodiment, the effluent gas comprises a flue gas produced by said combustion.

In one embodiment, said combustion is performed to provide heat to the gas conversion. Said gas conversion is in particular an endothermic gas conversion.

In one embodiment, the process comprises a step of recovering hydrogen from the hydrogen product, for example by pressure or temperature swing adsorption, and/or by partial condensation. A pure hydrogen stream comprising more than 90 mol%, preferably more than 95 mol%, preferably more than 99 mol% hydrogen may thereby be obtained.

In one aspect of the invention, the liquid phase of the ammonia stream is sent from the vaporizer to the first heat exchanger by a downcomer duct, and the vaporized liquid phase is returned to the vaporizer by a riser duct.

In one aspect of the invention, the downcomer duct is arranged to route the denser phase, for example here the liquid phase from the vaporizer to the heat exchanger, and the riser duct is arranged to return the less dense phase, for example here the vaporized phase, from the heat exchanger to the vaporizer.

In one aspect of the invention, the ammonia stream is provided in a liquid form, typically at a temperature comprised between -33°C and 20°C.

In one embodiment, the heating medium is heating the vaporizer in a second heat exchanger, said second heat exchanger being arranged in the vaporizer.

In one aspect of the invention, the heating medium comprises steam.

In one embodiment, the steam used as said heating medium is generated by water used for cooling the effluent gas in an effluent gas boiler.

In one embodiment, the effluent gas is discharged from the gas conversion unit in an effluent gas duct.

In one embodiment, the first heat exchanger is arranged in the effluent gas duct. The effluent gas boiler is in particular arranged in the effluent gas duct upstream the first heat exchanger.

In one embodiment, the vaporization pressure in the vaporizer can be lowered during a start-up phase of the process.

In one embodiment, the process comprises a startup phase comprising reducing a heat load from the heating medium to the step of vaporizing at least a portion of the ammonia stream, and increasing a heat load from effluent gas to the step of vaporizing at least a portion of the ammonia stream.

In one aspect of the invention, the heating medium is provided to the vaporizer during a start-up phase of the process.

In one aspect of the invention, the process comprises an air preheating step comprising heating air by heat exchange with the effluent gas, in particular by heat exchange with said flue gas, and sending the heated air as oxidant to said combustion, the heat exchange between the effluent gas and the liquid phase in the first heat exchanger being performed in said effluent gas duct downstream said air preheating step.

In particular, the heat exchange between the effluent gas and the liquid phase is performed in the effluent gas duct in the first heat exchanger, said first heat exchanger being arranged in the effluent gas duct downstream a cold air preheater, which is arranged in the effluent gas duct downstream said effluent gas boiler, which is arranged in the effluent gas duct downstream a hot air preheater.

In one embodiment, the cold air preheater is arranged in a colder portion of the effluent duct than the hot air preheater.

In one embodiment, the first heat exchanger and the second heat exchanger are both arranged in the vaporizer, in particular in a vaporization chamber of the vaporizer.

The invention also proposes an installation for producing hydrogen from a feedstock stream, said installation comprising:
- a vaporizer configured to receive an ammonia stream and to vaporize at least a portion of said ammonia stream,
- a gas conversion unit for the conversion of said feedstock stream,
- optionally, a fired equipment,
- an effluent gas duct arranged to discharge an effluent gas from the gas conversion unit,
- a first heat exchanger arranged to provide heat from the effluent gas to contribute to vaporize a portion of the ammonia stream of the vaporizer,
- a second heat exchanger arranged in the vaporizer, said heat exchanger being configured to exchange heat between the ammonia stream and a heating medium different from the effluent gas, and thus at least partially vaporize the ammonia stream in said vaporizer,
- a vaporized ammonia circulation duct, connecting the vaporizer with the gas conversion unit to provide the vaporized ammonia to the gas conversion unit as said feedstock stream and/or connecting the vaporizer with the fired equipment to provide the vaporized ammonia as a fuel to said fired equipment.

In one embodiment, the vaporizer is configured to vaporize a portion of the ammonia stream received in said vaporizer, to obtain a gas phase and a liquid phase of the ammonia stream and the first heat exchanger is arranged in the effluent gas duct to vaporize at least a portion of the liquid phase of the ammonia stream by heat exchange with the effluent gas, said first heat exchanger being fluidically connected to the vaporizer with a first duct arranged to send said liquid phase from the vaporizer to the first heat exchanger, and a second duct arranged to return the vaporized liquid phase stream to the vaporizer.

In another embodiment, the first heat exchanger is arranged in the vaporizer, in particular, in a vaporization chamber of the vaporizer, and the first heat exchanger is fluidically connected to the effluent gas duct. The installation may comprise a superheater fluidically connected to the effluent gas duct and arranged upstream the first heat exchanger with respect to the effluent gas, for superheating the vaporized ammonia from the vaporizer is using waste heat from the effluent gas (for instance a cracked gas). In one embodiment, the first heat exchanger comprises at least one tube or a bundle of tubes configured for receiving the effluent gas.

In one embodiment, the installation comprises an ammonia source connected to the vaporizer to provide said ammonia stream to said vaporizer. The ammonia source may for example be a liquid ammonia tank for storing ammonia in a liquid form, typically at a temperature comprised between -33°C and 20°C.

In one embodiment, the second heat exchanger comprises at least an inlet for receiving the heating medium, and at least an outlet for discharging the cooled heating medium.

In one embodiment, the second heat exchanger comprises at least one tube configured for receiving the heating medium, said inlet being configured for receiving the heating medium in said at least one tube and said outlet being configured for discharging the cooled heating medium from said at least one tube.

In one embodiment, the installation comprises an effluent gas boiler arranged to produce the heating medium by heat exchanges with the effluent gas.

In one embodiment, the effluent gas boiler is arranged in the effluent gas duct. The effluent gas boiler is in particular arranged in the effluent gas duct upstream the first heat exchanger.

In one embodiment, the installation comprises at least one air preheater connected to the fired equipment to send heated air as oxidant to the fired equipment, said at least one air preheater being arranged in the effluent gas duct upstream the first heat exchanger.

In one embodiment, said at least one air preheater comprises a cold air preheater and a hot air preheater, the first heat exchanger being arranged in the effluent gas duct downstream the cold air preheater, which is arranged in the effluent gas duct downstream the effluent gas boiler, which is arranged in the effluent gas duct downstream the hot air preheater.

In one embodiment, the installation comprises a steam drum fluidically connected to the effluent gas boiler, said effluent gas boiler being arranged to send steam as said heating medium to the steam drum.

In one embodiment, the steam drum is fluidically connected to the effluent gas boiler by a downcomer duct arranged to send a liquid water phase from the steam drum to the effluent gas boiler and by a riser duct arranged to send a gas phase from the effluent gas boiler to the steam drum.

In one embodiment, the vaporizer comprises a vaporization chamber configured to receive the ammonia stream and vaporize at least a portion of said ammonia stream. Said vaporization chamber may comprise a blowdown outlet configured to discharge a blowdown stream comprising traces of water and oil contaminants from said vaporization chamber.

In one embodiment, the first heat exchanger and the second heat exchanger are both arranged in the vaporizer, in particular in said vaporization chamber.

In one embodiment, the gas conversion unit comprises a gas conversion reactor configured for the conversion of said feedstock stream. For example, the gas conversion reactor may be a cracking reactor arranged for cracking ammonia as a feed. In another example the gas conversion reactor may be a reformer arranged for the reforming of hydrocarbons.

In one embodiment, the gas conversion unit comprises a furnace arranged in a thermal communication with the gas conversion reactor to provide heat to the gas conversion reactor and the fired equipment comprises said furnace.

In one embodiment, the effluent gas duct is arranged to discharge from said gas conversion reactor a hydrogen product produced by the conversion of said feedstock stream. In the embodiment wherein the gas conversion reactor is a cracking reactor, said hydrogen product is a cracked gas. In the embodiment wherein the gas conversion reactor is a reformer arranged for the reforming of hydrocarbons, said hydrogen product is a synthesis gas.

In one embodiment, the effluent gas duct is arranged to discharge a flue gas from said furnace. In such embodiment, the effluent gas duct is in particular a flue gas tunnel.

In one embodiment, the installation comprises one or more ammonia stream superheaters arranged to superheat the vaporized ammonia, said superheaters being arranged upstream the first heat exchanger in the effluent gas duct.

In one embodiment, the installation comprises a hydrogen recovery unit, such as a pressure swing adsorption unit and/or a partial condensation unit, arranged to recover hydrogen from the hydrogen product.

Further features, details and advantages of the invention will become more clearly apparent from reading the description given below by way of indication with reference to the drawings, in which:
[Fig. 1] is a schematic representation of the installation according to a first embodiment of the invention;
[Fig. 2] is a schematic representation of a part of the installation shown in figure 1;
[Fig. 3] is a schematic representation of a vaporizer according to a second embodiment of the invention.

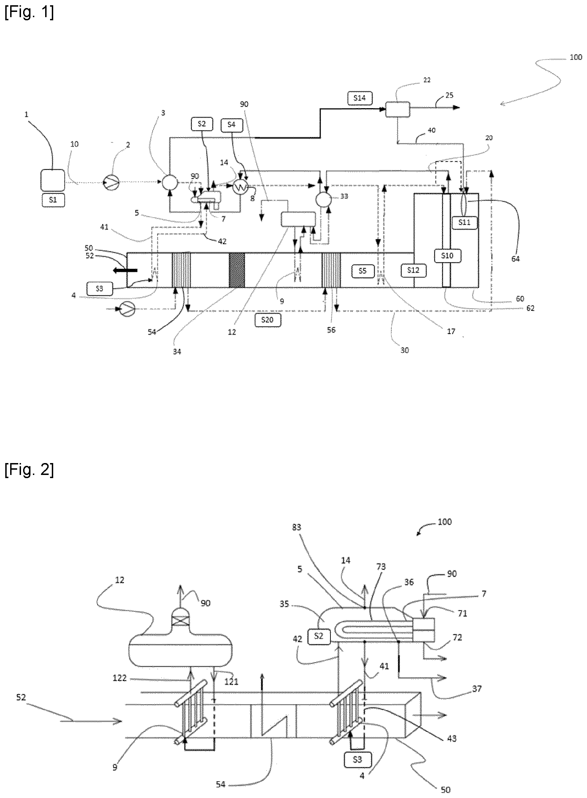

Figure 1 shows a process 100 for producing a hydrogen product 20 (also called as a cracked gas) from a feedstock stream 10 (also called as an ammonia stream).

In a first embodiment disclosed in Figures 1 and 2, the process 100 comprises the following steps:
- providing the ammonia stream 10 (Step S1),
- sending the ammonia stream 10 to a vaporizer 5 configured to receive said ammonia stream 10 and vaporizing (Step S2) a portion of said ammonia stream 10 by heating said portion of the ammonia stream 10 with a heating medium different from a flue gas 52, said heating medium comprises steam 90,
- superheating the vaporized ammonia 14 (Step S4),
- sending the superheated vaporized ammonia 14 as said feedstock stream 10 into a gas conversion unit 60 to perform a gas conversion for producing the hydrogen product 20 (Step S10),
- performing a combustion to bring a heat input to the gas conversion unit 60 (Step S 11),
- discharging an effluent gas (Step S12) from the gas conversion unit 60, the effluent gas comprising a flue gas 52,
- recovering hydrogen 25 from the hydrogen product 20 (Step S14).

Optionally, the process 100 comprises a step of sending the vaporized ammonia 14 from said vaporizer 5 as a fuel to said combustion.

The process 100 comprises providing heat with the effluent gas comprising flue gas 52 to contribute to vaporize a portion of the ammonia stream 10 by carrying out the following steps:
- vaporizing the portion of said ammonia stream 10 sent to the vaporizer 5, thereby obtaining a gas phase (also called vaporized ammonia 14) and a liquid phase of the ammonia stream 10 in the vaporizer 5 (Step S2),
- sending the part of the liquid phase of the ammonia stream 10 from the vaporizer 5 to a first heat exchanger 4 arranged to partially vaporize said liquid phase by heat exchange with the flue gas 52 and returning the vaporized liquid phase to the vaporizer 5 (Step S3).

The liquid phase of the ammonia stream 10 is sent from the vaporizer 5 to the first heat exchanger 4 by a downcomer duct 41, and a vaporized liquid phase is returned to the vaporizer 5 (also called vaporized ammonia 14) by a riser duct 42.

The process 100 utilizes two different heating media which are steam 90 and the cracked gas 20 (hydrogen product), to ensure effective ammonia vaporization throughout different operational phases, including a start-up phase. The process 100 optimizes energy usage and enhances hydrogen production efficiency.

The step of providing liquid ammonia stream 10 (Step S1) is made by a feed duct which is arranged to provide the liquid ammonia stream 10 from an ammonia source 1. The ammonia stream 10 is provided to the vaporizer 5 in a liquid form, typically at a temperature comprised between -33°C and 20°C.

The heating medium (steam 90) is heating the vaporizer 5 in a second heat exchanger 7, said second heat exchanger 7 being arranged in the vaporizer 5.

The step of gas conversion (Step S10) comprises a cracking reaction of ammonia and produces the cracked gas 20. The gas conversion unit 60 is provided with a gas conversion reactor 62 which is a cracking reactor arranged for cracking ammonia as a feed.

In the step of recovering hydrogen 25 from the hydrogen product 20 (Step S14), the pure hydrogen stream comprises more than 90 mol%, preferably more than 95 mol%, preferably more than 99 mol% hydrogen 25 is thereby obtained.

We will now further describe the installation 200 for implementing the process 100 described above.

Said installation 200 comprises the gas conversion unit 60 with a furnace arranged in a thermal communication with the gas conversion reactor 62 to provide heat to the gas conversion reactor 62 and a fired equipment 64 comprises said furnace.

The fired equipment 64 is connected to an effluent gas duct 50 to discharge the flue gas 52 from said fired equipment 64. The effluent gas duct 50 is a flue gas tunnel.

The first heat exchanger 4 is fluidically connected to the vaporizer 5 with a first duct (also called the downcomer duct 41) arranged to send the liquid phase from the vaporizer 5 to the first heat exchanger 4, and a second duct (also called the riser duct 42) arranged to return the vaporized liquid phase stream 14 to the vaporizer 5.

The vaporizer 5 comprises a vaporization chamber 35 with a blowdown outlet 36 configured to discharge a blowdown stream 37 comprising traces of water and oil contaminants from said vaporization chamber 35. Oil and water are presented at battery limit and are heavier than ammonia stream 10. Oil and water are accumulated and periodically removed.

The installation 200 also comprises a steam drum 12 which is fluidically connected to an effluent gas boiler 9 which is arranged to send steam 90 as said heating medium to the steam drum 12.

The steam drum 12 is fluidically connected to the effluent gas boiler 9 by a downcomer duct 121 arranged to send a liquid water phase from the steam drum 12 to the effluent gas boiler 9 and by a riser duct 122 arranged to send a gas phase from the effluent gas boiler 9 to the steam drum 12.

The effluent gas boiler 9 is arranged to produce the heating medium 90 by heat exchanges with flue gas 52.

The installation 200 comprises a process gas boiler 33 configured to provide heat by the hydrogen product 20 to generate steam 90 for the steam drum 12.

The installation 200 comprises a vaporized ammonia circulation duct, connecting the vaporizer 5 by a vaporized ammonia outlet 83, with the gas conversion unit 60 to provide the vaporized ammonia 14 to the gas conversion unit 60 as said feedstock stream 10.

Optionally, the vaporized ammonia circulation duct connects the vaporizer 5 with the fired equipment 64 to provide the vaporized ammonia 14 as a fuel to said fired equipment 64.

The second heat exchanger 7 comprises an inlet 71 for receiving the steam 90, and an outlet 72 for discharging the cooled steam 90.

The second heat exchanger 7 comprises tubes 73 configured for receiving the steam 90, said inlet 71 which is configured for receiving the steam 90 in the tubes 73 and said outlet 72 which is configured for discharging the cooled steam 90 from the tubes 73.

The installation 200 further comprises a hydrogen recovery unit 22. The hydrogen recovery unit 22 is arranged to perform the step of recovering the hydrogen 25 from the hydrogen product 20 (Step S14) by the pressure swing adsorption unit. The hydrogen recovery unit 22 is arranged to recover the unconverted ammonia 40 to be used as fuel in the gas conversion reactor 62. The hydrogen recovery unit 22 is, for the hydrogen product 20, downstream of a secondary preheater 3 which is the last heat exchanger for recovering heat from the hydrogen product 20.

The installation 200 also comprises ammonia stream superheater 8 downstream of the vaporizer 5. The superheater 8 is arranged to superheat the vaporized ammonia 14 (Step S4). The step of superheating (Step S4) the vaporized ammonia 14 uses heat supplied by the hydrogen product 20.

The installation 200 comprises a superheater 17 fluidically connected to the effluent gas duct 50 and arranged upstream the first heat exchanger 4 with respect to the flue gas 52, for superheating the vaporized ammonia 14 from the vaporizer 5 (Step S5). The superheated step (Step S5) uses waste heat from flue gas 52.

The installation 200 comprises a feed pump 2 configured to supply the ammonia stream 10 to the vaporizer 5. The feed pump 2 allows to increase the pressure of the liquid ammonia stream 10 from the battery limit to a target process pressure.

An SCR unit (Selective Catalytic Reduction) 34 may be placed in the effluent gas duct 50 to reduce nitrogen oxide (NOx) emissions in the flue gas 52.

The secondary preheater 3 is arranged upstream the first heat exchanger 4 on the ammonia stream 10 flow. The secondary preheater 3 is arranged to perform the secondary preheating of the ammonia stream 10 by heat exchange with the cracked gas 20 (hydrogen product).

The process 100 also comprises an air preheating step (Step S20) comprising heating air by heat exchange with flue gas 52 and sending a heated air 30 as oxidant to said combustion, to the fired equipment 64, through a cold air preheater 54 and a hot air preheater 56.

The cold air preheater 54 is arranged in a colder portion of the effluent duct 50 than the hot air preheater 56 and is downstream the effluent gas boiler 9. The effluent gas boiler 9 is arranged in the effluent gas duct 50 downstream the hot air preheater 56.

The heat exchange between the flue gas 52 and the liquid phase in the first heat exchanger 4 (Step S3) is performed in the effluent gas duct 50 downstream the cold air preheater 54.

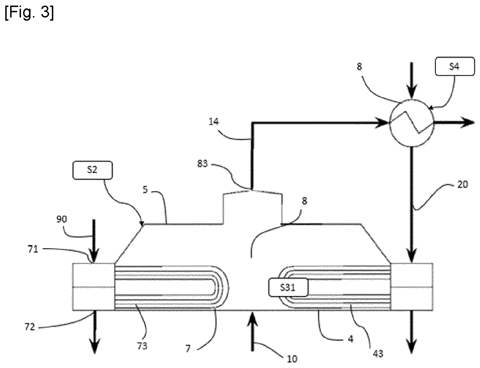

In another embodiment illustrated in figure 3, the step of providing heat with the effluent gas to contribute to vaporize a portion of the ammonia stream 10 comprises the following step:
- heating a portion of the ammonia stream 10 in said vaporizer 5 with a first heat exchanger 4 receiving the effluent gas comprising the cracked gas 20, said first heat exchanger 4 being arranged in the vaporizer 5 (Step S31).

The effluent gas comprising the cracked gas 20 is sent to the first heat exchanger 4 from the superheater 8.

The first heat exchanger 4 and the second heat exchanger 7 are both arranged in the vaporizer 5 and may comprise respectively tubes or coils 43 and 73.

## Claims

1. A process (100) for producing a hydrogen product (20) from a feedstock stream (10), the process (100) comprising the following steps:
- providing an ammonia stream (10) (S1),
- sending the ammonia stream (10) to a vaporizer (5) configured to receive said ammonia stream (10) and vaporizing at least a portion of said ammonia stream (10) (S2),
- optionally, performing a combustion to bring a heat input to the process (100) (S11),
- introducing the feedstock stream (10) into a gas conversion unit (60) to perform a gas conversion for producing said hydrogen product (20) (S10),
- discharging an effluent gas stream from said gas conversion unit (S12),
- providing heat from the effluent gas to contribute to vaporize the ammonia stream (10) of the vaporizer (5),
- wherein vaporizing at least a portion of the ammonia stream (10) in said vaporizer (5) (S2) comprises heating said portion of the ammonia stream (10) with a heating medium different from the effluent gas,
- the process (100) further comprising sending the vaporized ammonia (14) from said vaporizer (5) as said feedstock stream (10) and/or sending the vaporized ammonia (14) from said vaporizer (5) as a fuel to said combustion.

2. Process (100) according to claim 1, wherein the feedstock stream (10) comprises ammonia and the gas conversion (S10) comprises a cracking reaction of ammonia and produces a cracked gas (20) as said hydrogen product (20).

3. Process (100) according to any one of the preceding claims, wherein the effluent gas comprises said cracked gas (20).

4. Process (100) according to one of the preceding claims, wherein the step of providing heat from the effluent gas to contribute to vaporize a portion of the ammonia stream (10) comprises the following step:
- heating a portion of the ammonia stream (10) in said vaporizer (5) with a first heat exchanger (4) receiving the effluent gas (S31), said first heat exchanger (4) being arranged in the vaporizer (5).

5. Process (100) according to one of the preceding claims, wherein the effluent gas comprises a flue gas (52) produced by said combustion (S11).

6. Process (100) according to one of the preceding claims, wherein the step of providing heat from the effluent gas to contribute to vaporize a portion of the ammonia stream (10) comprises the following steps :
- vaporizing a portion of said ammonia stream sent to the vaporizer (5), thereby obtaining a gas phase and a liquid phase of the ammonia stream (10) in said vaporizer (5),
- sending at least part of the liquid phase of the ammonia stream from the vaporizer (5) to a first heat exchanger (4) arranged to at least partially vaporize said liquid phase by heat exchange with the effluent gas and returning the vaporized liquid phase to the vaporizer (5).

7. Process (100) according to any one of the preceding claims, wherein said combustion (S11) is performed to provide heat to the gas conversion (S10), said gas conversion (S10) is in particular an endothermic gas conversion.

8. Process (100) according to any one of the preceding claims, wherein the heating medium is heating the vaporizer (5) in a second heat exchanger (7), said second heat exchanger (7) being arranged in the vaporizer (5).

9. Process (100) according to any one of the preceding claims, comprising an air preheating step (S20) comprising heating air (30) by heat exchange with the effluent gas, in particular by heat exchange with said flue gas (52), and sending the heated air (30) as oxidant to said combustion, the heat exchange between the effluent gas and the liquid phase in the first heat exchanger (4) being performed in an effluent gas duct (50) downstream said air preheating step (S20).

10. An installation (200) for producing hydrogen 25 from a feedstock stream (10), said installation (200) comprising:
- a vaporizer (5) configured to receive an ammonia stream (10) and to vaporize at least a portion of said ammonia stream (10),
- a gas conversion unit (60) for the conversion of said feedstock stream (10),
- optionally, a fired equipment (64),
- an effluent gas duct (50) arranged to discharge an effluent gas from the gas conversion unit (60),
- a first heat exchanger (4) arranged to provide heat from the effluent gas to contribute to vaporize a portion of the ammonia stream (10) of the vaporizer (5),
- a second heat exchanger (7) arranged in the vaporizer (5), said heat exchanger (7) being configured to exchange heat between the ammonia stream (10) and a heating medium different from the effluent gas, and thus at least partially vaporize the ammonia stream (10) in said vaporizer (5),
- a vaporized ammonia circulation duct, connecting the vaporizer (5) with the gas conversion unit (60) to provide the vaporized ammonia (14) to the gas conversion unit (60) as said feedstock stream (10) and/or connecting the vaporizer (5) with the fired equipment (64) to provide the vaporized ammonia (14) as a fuel to said fired equipment (64).

11. Installation (200) according to the preceding claim, comprising an effluent gas boiler (9) arranged to produce the heating medium by heat exchange with the effluent gas.

12. Installation (200) according to the preceding claim, wherein the effluent gas boiler (9) is arranged in the effluent gas duct (50) upstream the first heat exchanger (4).

13. Installation (200) according to any one of claims 10 to 12, comprises at least one air preheater (54, 56) connected to the fired equipment (64) to send heated air as oxidant to the fired equipment (64), said at least one air preheater (54, 56) being arranged in the effluent gas duct (50) upstream the first heat exchanger (4).

14. Installation (200) according to any one of the claims 10 to 13, wherein the first heat exchanger is arranged in the vaporizer and the first heat exchanger (4) is fluidically connected to the effluent gas duct (50).

15. Installation (200) according to any one of the claims 10 to 14,
wherein the gas conversion unit (60) comprises :
- a gas conversion reactor (62) configured for the conversion of said feedstock stream (10),
- a furnace arranged in a thermal communication with the gas conversion reactor (62) to provide heat to the gas conversion reactor (62),
and wherein :
- the fired equipment (64) comprises said furnace,
- the effluent gas duct (50) is arranged to discharge a flue gas (52) from said furnace.
